# EUROPEAN PATENT SPECIFICATION

(11) **EP 2 964 840 B1**
(45) Date of publication and mention of the grant of the patent: **16.01.2019**
(21) Application number: 14707424.9
(22) Date of filing: 03.03.2014
(51) Int. Cl.: E02F 3/96, F16C 11/04, E02F 9/00, F16B 21/16

(54) **A MOUNTING PIN AND A PIN SECURING ASSEMBLY**
HALTESTIFT UND STIFTSICHERUNGSANORDNUNG
GOUPILLE DE FIXATION ET ENSEMBLE DE FIXATION DE GOUPILLE

(30) Priority: 06.03.2013 GB 201303997
(43) Date of publication of application: 13.01.2016
(73) Proprietor: Caterpillar Work Tools B.V., 5232 BJ 's-Hertogenbosch (NL)
(72) Inventor: GRANT, Patrick, NL-5045 ML Tilburg (NL); VAN DER HEIJDEN, Gertjan, NL-5281 SV Boxtel (NL)
(74) Representative: BRP Renaud & Partner mbB Rechtsanwälte Patentanwälte Steuerberater
(86) International application number: PCT/EP2014/054076
(87) International publication number: WO 2014/135498

(56) References cited:
- DE-A1-102009 046 227
- US-A- 4 096 957
- US-A1- 2007 274 777
- US-A1- 2007 298 980

## Description

### TECHNICAL FIELD

This invention relates to fastening means, in general, and in particular to a mounting pin and a pin securing assembly used in the formation of a pivot joint, for example, to attach a work tool or implement to a machine that operates the work tool.

### BACKGROUND

Work tools or implements, such as grapples, are conventionally attached to a tool mounting piece of a machine operating the implement, using a substantially cylindrical pin. The pin retains the implement to the machine while allowing the implement to rotate or swing freely relative to the tool mounting piece.

In order to mount an implement in a known configuration, a tool mounting piece, defining a bore for receiving a pin, is inserted between a pair of opposing attachment plates of an attachment portion of the implement to be mounted. The attachment plates have registering holes for receiving the pin through each plate. The pin includes a flanged head which is attached to one end of a circular cylindrical pin body and a locking formation, in the form of an axially extending screw-threaded hole, extending into the body from an opposing distal end of the body. With the bore of the tool mounting piece in register with the registering holes in the plates, the pin is slid through the registering holes and the bore such that the distal end of the pin protrudes from a distal attachment plate and the flanged head of the pin is seated within a complementary head receiving formation formed on a proximal attachment plate. The head receiving formation prevents angular displacement of the pin relative to the attachment plates. In order to retain the pin in place, a locking plate having a diameter which is greater than the registering holes is attached to the distal end of the pin body by screwing a fastener into the locking formation. The locking plate and flanged head thus prevent axial displacement of the pin relative to the attachment portion.

Owing to manufacturing and design tolerances there exists a certain amount of play between the flanged head and the complementary head receiving formation, which is undesirable. Furthermore, in order to assemble the assembly, the pin is inserted into the hole of the proximal attachment plate from a first side of the attachment portion and is locked into place from the opposite side. It is therefore necessary to gain access to both ends of the pin, or both sides of the attachment portion in order to assemble or remove the pin. In many configurations it may be possible to gain access to at least one end of the pin, or one side of the attachment portion, but sometimes gaining access to both ends of the pin, or both sides of the attachment portion, poses a problem due to the compact design of the machinery.

Document DE 10 2009 046227 A discloses a pin securing assembly 10 for use in a pivot joint, the assembly 10 comprising:
- a pin mounting piece 12 comprising: a pair of spaced apart, parallel lugs 22,24 having corresponding registering holes 26,28; and
- a mounting pin 14 comprising: an elongate body portion positioned in the holes 26,28, the body portion having opposed ends; and
- a protruding portion 32 which protrudes from an end of the body portion and on which is provided oppositely disposed, first and second mounting formations 30, the mounting formations having corresponding first ends and corresponding second ends,
wherein the protruding portion 32 protrudes from the pin mounting piece 12; a securing member 20 which defines a seat having oppositely disposed, inwardly facing, first and second faces 46, which are complementary to and seat against the first and second mounting formations, respectively; and locking means 60 locking the securing member 20 releasably to the pin mounting piece 12 such that substantial angular and axial displacement of the pin 14 relative to the mounting piece 12 is prevented;
wherein the end portions of the pin seated in openings 36 as slide bearings permit rotation of the tool mounted about the pin 14.

### SUMMARY

According to a first aspect of the invention, there is provided a pin securing assembly for use in a pivot joint, the assembly comprising: a pin mounting piece comprising: a pair of spaced apart, parallel lugs having corresponding registering holes; and a tool mounting piece having a circular cylindrical bore and being arranged coaxially between the lugs such that the bore is in register with the holes; a mounting pin comprising: an elongate body portion positioned in the holes and the bore of the pin mounting piece, the body portion having opposed ends; and a protruding portion which protrudes from an end of the body portion and on which is provided oppositely disposed, first and second mounting formations, the mounting formations having corresponding first ends and corresponding second ends, the mounting formations being inclined relative to one another such that a first distance X between the first ends is greater than a second distance Y between the second ends of the respective mounting formations, wherein the protruding portion protrudes from the pin mounting piece; a securing member which defines a seat having oppositely disposed, inwardly facing, first and second faces which are complementary to and seat against the first and second mounting formations, respectively; and locking means locking the securing member releasably to the pin mounting piece such that substantial angular and axial displacement of the pin relative to the mounting piece is prevented; wherein the body portion located within the tool mounting piece forms a journal which permits rotation of the tool mounting piece about the pin.

According to another aspect of the invention, there is provided a method of retrofitting a mounting pin to a pin mounting piece, wherein the pin mounting piece comprises: a pair of spaced apart, parallel lugs having corresponding registering holes; and a tool mounting piece having a circular cylindrical bore and being arranged coaxially between the lugs such that the bore is in register with the holes; and the mounting pin comprises: an elongate body portion positioned in the holes and the bore of the pin mounting piece, the body portion having opposed ends; and a protruding portion which protrudes from an end of the body portion and on which is provided oppositely disposed, first and second mounting formations, the mounting formations having corresponding first ends and corresponding second ends, the mounting formations being inclined relative to one another such that a first distance X between the first ends is greater than a second distance Y between the second ends of the respective mounting formations, wherein the protruding portion protrudes from the pin mounting piece; wherein the method comprises: removing a securing member whereby an existing pin is secured to the pin mounting piece; removing the existing pin from a hole in the pin mounting piece; replacing the existing pin with the mounting pin; positioning a securing member which defines a seat having oppositely disposed, inwardly facing first and second faces, which are complementary to and seat against the first and second mounting formations, in engagement with the protruding portion of the mounting pin such that the faces seat against the first and second mounting formations; and locking the securing member to the pin mounting piece such that substantial angular and axial displacement of the pin relative to the mounting piece is prevented; such that the body portion located within the tool mounting piece forms a journal which permits rotation of the tool mounting piece about the pin.

### BRIEF DESCRIPTION OF THE DRAWINGS

- **FIG. 1**: illustrates a three-dimensional, exploded view of a pin securing assembly in accordance with an example embodiment;
- **FIG. 2**: illustrates a three-dimensional view of the assembly of FIG. 1 in an assembled condition;
- **FIG. 3**: illustrates a cross-sectional view through the assembly of FIG. 2 along lines III-III indicated in FIG. 4; and
- **FIG. 4**: illustrates a longitudinal sectional view through a pin in accordance with an example embodiment taken along lines IV-IV shown in FIG.3.

### DETAILED DESCRIPTION

A pin securing assembly, in accordance with the disclosure is generally indicated by numeral 10 in FIG'S 1 to 3. Furthermore, a mounting pin in accordance with the disclosure is indicated by numeral 100 in FIG'S 1 to 4.

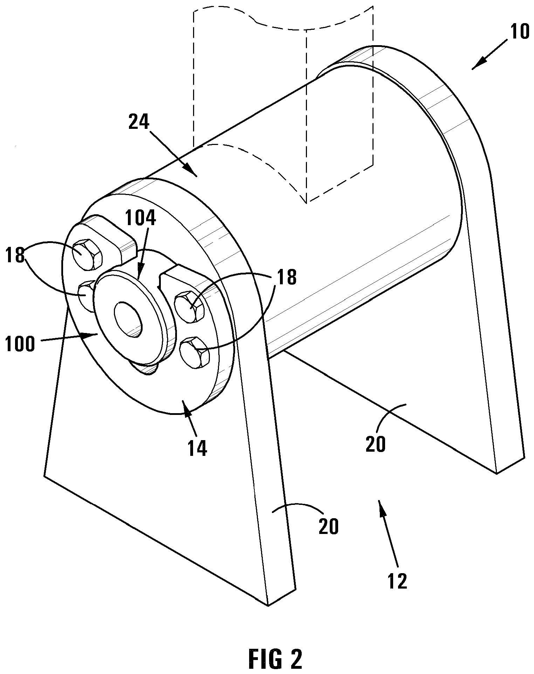

In the example embodiment illustrated in the figures, the pin securing assembly 10 is used to attach a work tool or implement to a machine and comprises a pin mounting piece 12, a mounting pin 100 comprising an elongate body portion 102 which is positioned within the pin mounting piece 12 (see FIG.2) and a protruding portion 104 which protrudes from the pin mounting piece 12, a U-shaped securing member 14 which defines a seat 16 which engages the protruding portion 104 of the mounting pin 100 and locking means 18 in the form of a plurality of screw-threaded bolts which releasably lock the securing member 14 to the pin mounting piece 12. It is to be understood, however, that the mounting pin 100 and pin securing assembly 10 may be used in the formation of a pivot joint which is used in other applications.

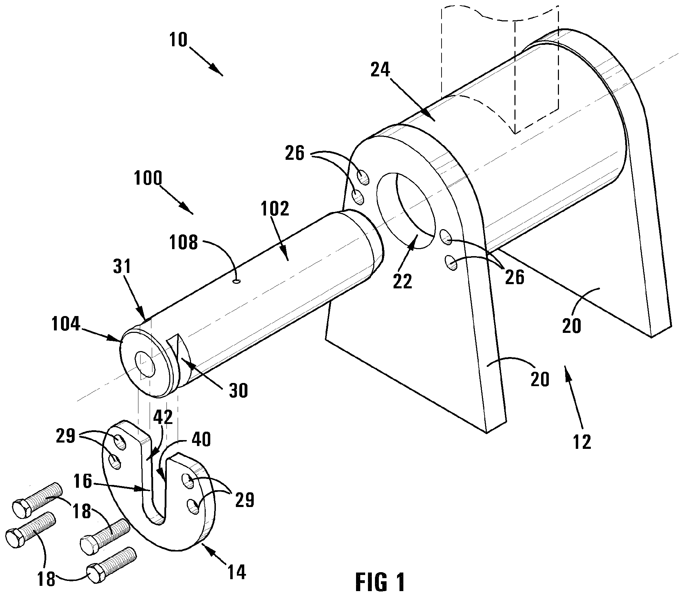

The pin mounting piece 12 comprises a pair of spaced apart, parallel attachment plates or lugs 20 having corresponding registering, circular holes 22, only one of which is visible in FIG.1. When a work tool is attached to a machine, a hollow, circular cylindrical tool mounting piece 24 having a circular cylindrical bore within which the elongate body portion 102 of the mounting pin 100 is positioned, is arranged coaxially between the lugs 20 such that the bore is in register with the holes 22. One of the lugs 20, from which the protruding portion 104 protrudes, has a plurality of screw-threaded, circular apertures 26 arranged about a periphery of the hole 22, into which the locking means 18 screw. To this end, the securing plate 14 includes a plurality of openings 29, corresponding to the apertures 26, through which the screw-threaded bolts extend in order to lock the securing member 14 to the lug 20 of the pin mounting piece 12. The openings 29 are oversized in comparison with the apertures 26 to account for play between the securing member 14 and the mounting pin 100 caused, for example, by manufacturing tolerances.

Turning now to the mounting pin 100, the elongate body portion 102 has two opposed ends and is operatively positioned within the registering holes 22 and within the bore of the tool mounting piece 24 such that the protruding portion 104 protrudes from one end of the body portion 102. On the protruding portion 104 there is provided oppositely disposed, first and second mounting formations in the form of first and second locating grooves 30, 31. The locating grooves 30, 31 have corresponding first ends 32 and corresponding second ends 33 and are inclined relative to one another such that a first distance X between the first ends 32 is greater than a second distance Y between the second ends 33 of the respective first and second locating grooves 30, 31.

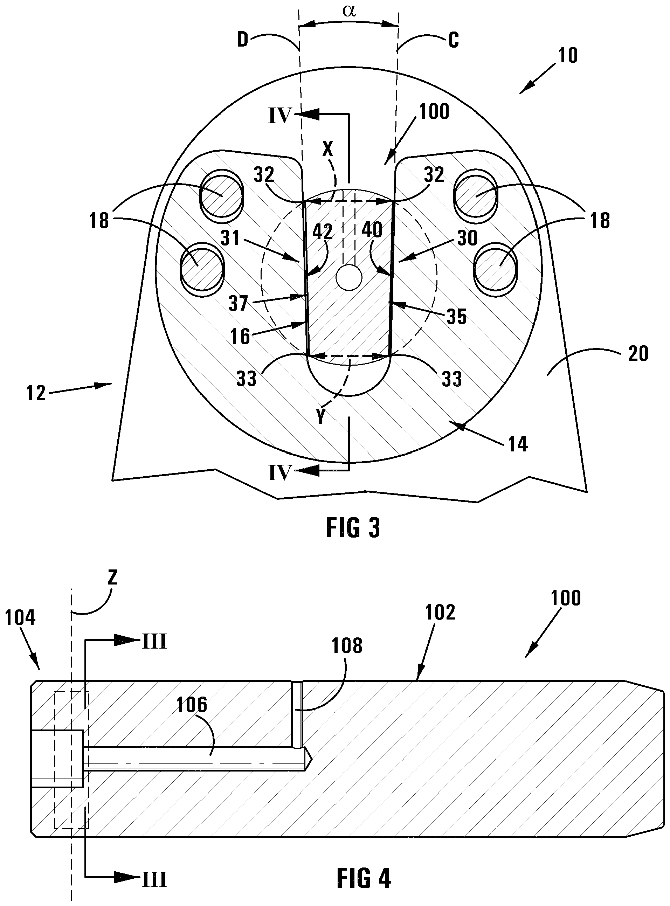

The mounting pin 100 is substantially circular cylindrical in shape and the first and second locating grooves 30, 31 extend transversely on diametrically opposite sides of the protruding portion 104 such that the grooves 30, 31 are formed within the same cross-sectional plane Z (see FIG.4) of the protruding portion 104. Turning to FIG.3, each groove 30, 31 is in the form of a segment-shaped cutaway and the first groove 30 has a first base surface 35 lying within a first plane C and the second groove 31 has a second base surface 37 lying within a second plane D, the first and second planes C, D being inclined relative to one-another at an angle α such that they are not parallel. In this example embodiment, the angle α is 3° but it is to be appreciated that the angle α may range from 2° to 10°.

The securing member 14 is in the form of a substantially U-shaped plate which defines a mouth receiving the protruding portion 104 of the pin 100. The seat 16 of the securing member 14 has a V-shaped profile when the plate is viewed face on, albeit marginally V-shaped in the example embodiment shown in the figures, and the seat 16 has oppositely disposed, inwardly facing, first and second faces 40, 42 which are complementary to and seat against the first and second base surfaces 35, 37, respectively. When the securing member 14 is located within the locating grooves 30, 31 and locked to the pin mounting piece 12, substantial angular and axial displacement of the pin 100 relative to the mounting piece 12 is prevented.

The mounting pin 100 further includes an internal, axially extending bore 106 which leads into a radially extending duct 108 which opens to the outside of the pin 100, at a periphery of the body portion 102, towards a longitudinal midpoint of the body portion 102. The bore 106 and duct 108 together define an L-shaped lubricant pathway. Although this has not been illustrated in the figures, a grease nipple may be attached to the pin 100 by screwing the nipple into an axially extending, screw-threaded hole formed in the protruding portion 104 such that the nipple is aligned with an end of the bore 106.

It may be desirable to retrofit the mounting pin 100 to an existing mounting piece thus converting an existing assembly into the pin securing assembly 10 in accordance with the disclosure. This is achieved by carrying out the following steps including:
removing a securing member whereby an existing pin is secured to the pin mounting piece;
removing the existing pin from a hole in the pin mounting piece;
replacing the existing pin with the mounting pin 100 such that the body portion 102 is positioned in the pin mounting piece and the protruding portion 104 protrudes from the pin mounting piece;
positioning the seat 16 of the securing member 14 in engagement with the protruding portion 104 of the mounting pin 100 such that the faces 40, 42 seat against the first and second mounting formations; and
locking the securing member 14 to the pin mounting piece.

It may be necessary to modify the pin mounting piece in order to facilitate attachment of the securing member 14 to the pin mounting piece, for example, by forming apertures 26 in the lug 20 of the pin mounting piece.

### INDUSTRIAL APPLICABILITY

In order to mount a work tool or implement to a machine using the assembly 10 and mounting pin 100 described above, the tool mounting piece 24 is positioned between the opposing lugs 20 such that the bore of the tool mounting piece 24 is in register with the holes 22 formed in the lugs 20. A distal end of the body portion 102 of the mounting pin 100 is then slid through the hole 22 formed in the first lug 20 having the screw-threaded apertures 26 and through the bore of the tool mounting piece 24 until the end of the body portion 102 protrudes through the opposing lug 20 and the protruding portion 104 protrudes from the first lug 20. The body portion 102 received within the tool mounting piece 24 thus forms a journal which permits rotation of the tool mounting piece 24 about the pin 100.

In order to lock the pin 100 in place with respect to the pin mounting piece 12 thus preventing angular and axial displacement of the pin 100 relative to the mounting piece 12, the seat 16 of the securing member 14 is brought into engagement with the respective locating grooves 30, 31 of the protruding portion 104 by positioning the mouth of the U-shaped plate over the protruding portion 104 until the respective first and second faces 40, 42 are in abutment with the base surfaces 35, 37 and the openings 29 formed in the securing member 14 align with the apertures 26 in the lug 20. In order to account for and reduce play between the securing member 14 and the pin 100, the openings 29 are oversized. Therefore, owing to the inclined locating grooves 30, 31 and the corresponding complementary seat 16, any play can be eliminated by moving the pin 100 deeper into the mouth of the U-shaped plate. When the plate is in position, shanks of the bolts of the locking means 18 are inserted into the openings and screw into the apertured 26 of the lug 20 until the heads of the bolts clamp the plate to the lug 20.

Disassembly is the reverse of the assembly process, however, an advantage of the pin securing assembly 10 in accordance with the disclosure is that the pin 100 can be inserted and removed from the pin mounting piece 12 while having access to only one side of the mounting piece 12. This is an improvement over prior art assemblies in which case the pin is inserted from a first side and secured in position from the opposite side of the mounting piece. Also, the manner in which the pin 100 is assembled renders it suitable for use in blind holes.

Furthermore, less basic material is needed to manufacture the pin 100, which results in a cost saving, owing to the fact that the pin 100 has an overall smaller diameter when compared with the prior art configuration due to the absence of a flanged head.

In addition, it may be possible to retrofit the mounting pin 100 in accordance with the disclosure to an existing mounting piece by:
removing a securing member whereby an existing pin is secured to the pin mounting piece;
removing the existing pin from a hole in the pin mounting piece;
replacing the existing pin with the mounting pin 100 such that the body portion 102 is positioned in the pin mounting piece and the protruding portion 104 protrudes from the pin mounting piece;
positioning the seat 16 of the securing member 14 in engagement with the protruding portion 104 of the mounting pin 100 such that the faces 40, 42 seat against the first and second mounting formations; and
locking the securing member 14 to the pin mounting piece using the locking means 18.

Although the function of the mounting pin 100 and pin securing assembly 10, as described above, is to attach a work tool or implement to a machine, the pin 100 and assembly 10 can be used in the formation of a pivot joint capable of use in other applications.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pin securing assembly 10 for use in a pivot joint, the assembly 10 comprising:
a pin mounting piece 12 comprising:
a pair of spaced apart, parallel lugs 20 having corresponding registering holes 22; and
a tool mounting piece 24 having a circular cylindrical bore and being arranged coaxially between the lugs 20 such that the bore is in register with the holes 22;
a mounting pin 100 comprising:
an elongate body portion 102 positioned in the holes 22 and the bore of the pin mounting piece 12, the body portion 102 having opposed ends; and
a protruding portion 104 which protrudes from an end of the body portion 102 and on which is provided oppositely disposed, first and second mounting formations, the mounting formations having corresponding first ends 32 and corresponding second ends 33, the mounting formations being inclined relative to one another such that a first distance X between the first ends 32 is greater than a second distance Y between the second ends 33 of the respective mounting formations,
wherein the protruding portion 104 protrudes from the pin mounting piece 12;
a securing member 14 which defines a seat 16 having oppositely disposed, inwardly facing, first and second faces 40, 42 which are complementary to and seat against the first and second mounting formations, respectively; and
locking means 18 locking the securing member 14 releasably to the pin mounting piece 12 such that substantial angular and axial displacement of the pin 100 relative to the mounting piece 12 is prevented;
wherein the body portion 102 located within the tool mounting piece 24 forms a journal which permits rotation of the tool mounting piece 24 about the pin 100.

2. A pin securing assembly 10 as claimed in claim 1, wherein the first and second mounting formations are in the form of first and second locating grooves 30, 31 formed in the protruding portion 104 of the pin 100 and wherein the pin 100 is substantially circular cylindrical in shape and the first and second locating grooves 30, 31 extend transversely on diametrically opposite sides of the protruding portion 104 such that the grooves 30, 31 are formed within the same cross-sectional plane Z of the protruding portion 104.

3. A pin securing assembly 10 as claimed in claim 2, wherein each groove 30, 31 is in the form of a segment-shaped cutaway, the first groove 30 having a first base surface 35 lying within a first plane C and the second groove 31 having a second base surface 37 lying within a second plane D, the first and second planes C, D being inclined relative to one-another at an angle α such that they are not parallel.

4. A pin securing assembly 10 as claimed in claim 3, in which the angle α formed between the first and second planes C, D ranges from 2° to 10° inclusive.

5. A pin securing assembly 10 as claimed in any of the preceding claims, which includes an axially extending bore 106, which extends into the pin 100 from one end and leads into a radially extending duct 108 which opens to the outside, at a periphery of the body portion 102, towards a longitudinal midpoint of the body portion 102, the bore 106 and duct 108 together defining a lubricant pathway.

6. A pin securing assembly 10 as claimed in any one of the preceding claims, wherein the securing member 14 is in the form of a substantially U-shaped plate which defines a mouth receiving the protruding portion 104 of the pin 100, the seat 16 having a V-shaped profile when the plate is viewed face on.

7. A pin securing assembly 10 as claimed in any one of the preceding claims, in which the securing member 14 includes at least two openings 29 through which the locking means 18 extend serving releasably to attach the securing member 14 to the pin mounting piece 12.

8. A pin securing assembly 10 as claimed in claim 7 wherein the locking means 18 are releasably attached to apertures 26 in the pin mounting piece 12, wherein the apertures 26 correspond to the at least two openings 29 and each opening 29 is oversized in comparison to the corresponding aperture 26.

9. A method of retrofitting a mounting pin 100 to a pin mounting piece 12, wherein the pin mounting piece 12 comprises:
a pair of spaced apart, parallel lugs 20 having corresponding registering holes 22; and
a tool mounting piece 24 having a circular cylindrical bore and being arranged coaxially between the lugs 20 such that the bore is in register with the holes 22; and
the mounting pin 100 comprises:
an elongate body portion 102 positioned in the holes 22 and the bore of the pin mounting piece 12, the body portion 102 having opposed ends; and
a protruding portion 104 which protrudes from an end of the body portion 102 and on which is provided oppositely disposed, first and second mounting formations, the mounting formations having corresponding first ends 32 and corresponding second ends 33, the mounting formations being inclined relative to one another such that a first distance X between the first ends 32 is greater than a second distance Y between the second ends 33 of the respective mounting formations,
wherein the protruding portion 104 protrudes from the pin mounting piece 12;
wherein the method comprises:
removing a securing member whereby an existing pin is secured to the pin mounting piece 12;
removing the existing pin from a hole 22 in the pin mounting piece 12;
replacing the existing pin with the mounting pin 100;
positioning a securing member 14 which defines a seat 16 having oppositely disposed, inwardly facing first and second faces 40, 42, which are complementary to and seat against the first and second mounting formations, in engagement with the protruding portion 104 of the mounting pin 100 such that the faces 40, 42 seat against the first and second mounting formations; and
locking the securing member 14 to the pin mounting piece 12 such that substantial angular and axial displacement of the pin 100 relative to the mounting piece 12 is prevented;
such that the body portion 102 located within the tool mounting piece 24 forms a journal which permits rotation of the tool mounting piece 24 about the pin 100.

## Patentansprüche

1. Bolzensicherungsanordnung 10 zur Verwendung in einem Drehgelenk, wobei die Anordnung 10:
ein Bolzenmontagestück 12, umfassend:
ein Paar voneinander beabstandete, parallele Ansätze 20 mit entsprechenden Ausrichtlöchern 22; und
ein Werkzeugaufnahmestück 24 mit einer kreiszylindrischen Bohrung, das koaxial zwischen den Ansätzen 20 angeordnet ist, sodass die Bohrung in Ausrichtung mit den Löchern 22 ist;
einen Montagebolzen 100, umfassend:
einen länglichen Körperabschnitt 102, der in den Löchern 22 und der Bohrung des Bolzenmontagestücks 12 positioniert ist, wobei der Körperabschnitt 102 gegenüberliegende Enden aufweist; und
einen vorstehenden Abschnitt 104, der von einem Ende des Körperabschnitts 102 vorsteht und an dem gegenüberliegend angeordnete erste und zweite Montageanordnungen vorgesehen sind, wobei die Montageanordnungen entsprechende erste Enden 32 und entsprechende zweite Enden 33 aufweisen, wobei die Montageanordnungen relativ zueinander geneigt sind, sodass ein erster Abstand X zwischen den ersten Enden 32 größer ist als ein zweiter Abstand Y zwischen den zweiten Enden 33 der jeweiligen Montageanordnungen,
wobei der vorstehende Abschnitt 104 von dem Bolzenmontagestück 12 vorsteht;
ein Sicherungselement 14, das eine Aufnahme 16 definiert, die gegenüberliegend angeordnete, nach innen weisende erste und zweite Flächen 40, 42 aufweist, die komplementär zu den ersten beziehungsweise zweiten Montageanordnungen sind und an diesen anliegen; und
Verriegelungsmittel 18, die das Sicherungselement 14 lösbar mit dem Bolzenmontagestück 12 verriegeln, sodass eine wesentliche Winkel- und Axialverschiebung des Bolzens 100 relativ zu dem Montagestück 12 verhindert wird, umfasst;
wobei der Körperabschnitt 102, der sich innerhalb des Werkzeugaufnahmestücks 24 befindet, einen Zapfen bildet, der eine Drehung des Werkzeugaufnahmestück 24 um den Bolzen 100 ermöglicht.

2. Bolzensicherungsanordnung 10 nach Anspruch 1, wobei die erste und zweite Montageanordnung in Form einer ersten und zweiten Aufnahmenute 30, 31 ausgebildet sind, die in dem vorstehenden Abschnitt 104 des Bolzens 100 ausgebildet sind und wobei der Bolzen 100 im Wesentlichen eine kreiszylindrische Form aufweist und die erste und zweite Aufnahmenute 30, 31 sich quer auf diametral gegenüberliegenden Seiten des vorstehenden Abschnitts 104 erstrecken, sodass die Nuten 30, 31 innerhalb derselben Querschnittsebene Z des vorstehenden Abschnitts 104 ausgebildet sind.

3. Bolzensicherungsanordnung 10 nach Anspruch 2, wobei jede Nut 30, 31 in Form eines segmentförmigen Ausschnitts ausgebildet ist, wobei die erste Nut 30 eine erste Grundfläche 35 aufweist, die innerhalb einer ersten Ebene C liegt, und die zweite Nut 31 eine zweite Grundfläche 37 aufweist, die innerhalb einer zweiten Ebene D liegt, wobei die erste und zweite Ebene C, D in einem Winkel α relativ zueinander geneigt sind, sodass sie nicht parallel sind.

4. Bolzensicherungsanordnung 10 nach Anspruch 3, bei der zwischen der ersten und zweiten Ebene C, D gebildete Winkel α im Bereich von 2° bis einschließlich 10° liegt.

5. Bolzensicherungsanordnung 10 nach einem der vorstehenden Ansprüche, die eine sich axial erstreckende Bohrung 106 beinhaltet, die sich von einem Ende in den Bolzen 100 hinein erstreckt und in einen sich radial erstreckenden Kanal 108 mündet, der sich nach außen hin an einer Peripherie des Körperabschnitts 102 in Richtung eines Längsmittelpunktes des Körperabschnitts 102 öffnet, wobei die Bohrung 106 und der Kanal 108 zusammen einen Schmiermitteldurchgang definieren.

6. Bolzensicherungsanordnung 10 nach einem der vorstehenden Ansprüche, wobei das Sicherungselement 14 in Form einer im Wesentlichen U-förmigen Platte ausgebildet ist, die eine Mündung definiert, die den vorstehenden Abschnitt 104 des Bolzens 100 aufnimmt, wobei die Aufnahme 16 in der Draufsicht der Platte ein V-förmiges Profil aufweist.

7. Bolzensicherungsanordnung 10 nach einem der vorstehenden Ansprüche, bei der das Sicherungselement 14 mindestens zwei Öffnungen 29 beinhaltet, durch die sich die Verriegelungsmittel 18 erstrecken, die lösbar dazu dienen, das Sicherungselement 14 an dem Bolzenmontagestück 12 anzubringen.

8. Bolzensicherungsanordnung 10 nach Anspruch 7, in der die Verriegelungsmittel 18 lösbar an Öffnungen 26 in dem Bolzenmontagestück 12 angebracht sind, wobei die Öffnungen 26 den mindestens zwei Öffnungen 29 entsprechen und jede Öffnung 29 im Vergleich zur entsprechenden Öffnung 26 überdimensioniert ist.

9. Verfahren zum Nachrüsten eines Montagebolzens 100 an ein Bolzenmontagestück 12, wobei das Bolzenmontagestück 12:
ein Paar voneinander beabstandete, parallele Ansätze 20 mit entsprechenden Ausrichtlöchern 22; und
ein Werkzeugaufnahmestück 24 mit einer kreiszylindrischen Bohrung, das koaxial zwischen den Ansätzen 20 angeordnet ist, sodass die Bohrung in Ausrichtung mit den Löchern 22 ist, umfasst; und
der Montagebolzen 100:
einen länglichen Körperabschnitt 102, der in den Löchern 22 und der Bohrung des Bolzenmontagestücks 12 positioniert ist, wobei der Körperabschnitt 102 gegenüberliegende Enden aufweist; und
einen vorstehenden Abschnitt 104, der von einem Ende des Körperabschnitts 102 vorsteht und an dem gegenüberliegend angeordnete erste und zweite Montageanordnungen vorgesehen sind, umfasst, wobei die Montageanordnungen entsprechende erste Enden 32 und entsprechende zweite Enden 33 aufweisen, wobei die Montageanordnungen relativ zueinander geneigt sind, sodass ein erster Abstand X zwischen den ersten Enden 32 größer ist als ein zweiter Abstand Y zwischen den zweiten Enden 33 der jeweiligen Montageanordnungen,
wobei der vorstehende Abschnitt 104 von dem Bolzenmontagestück 12 vorsteht;
wobei das Verfahren:
das Entfernen eines Sicherungselements, wodurch ein vorhandener Bolzen an dem Bolzenmontagestück 12 befestigt wird;
das Entfernen des vorhandenen Bolzens aus einem Loch 22 in dem Bolzenmontagestück 12;
das Ersetzen des vorhandenen Bolzens durch den Montagebolzen 100;
das Positionieren eines Sicherungselements 14, das eine Aufnahme 16 definiert, die gegenüberliegend angeordnete, nach innen weisende erste und zweite Flächen 40, 42 aufweist, die komplementär zu der ersten beziehungsweise zweiten Montageanordnung sind und an diesen anliegt, in Eingriff mit dem vorstehenden Abschnitt 104 des Montagebolzens 100, sodass die Flächen 40, 42 an der ersten und zweiten Montageanordnung anliegen; und
das Verriegeln des Sicherungselements 14 mit dem Bolzenmontagestück 12, sodass eine wesentliche Winkel- und Axialverschiebung des Bolzens 100 relativ zu dem Montagestück 12 verhindert wird, umfasst;
sodass der Körperabschnitt 102, der sich innerhalb des Werkzeugaufnahmestücks 24 befindet, einen Zapfen bildet, der eine Drehung des Werkzeugaufnahmestücks 24 um den Bolzen 100 ermöglicht.

## Revendications

1. Ensemble de fixation de goupille 10 pour une utilisation dans une articulation pivot, l'ensemble 10 comprenant :
une pièce de montage de goupille 12 comprenant :
une paire de pattes parallèles espacées 20 ayant des trous de mise en coïncidence correspondants 22 ; et
une pièce de montage d'outil 24 ayant un alésage cylindrique circulaire et étant agencée de manière coaxiale entre les pattes 20 de telle sorte que l'alésage coïncide avec les trous 22 ;
une goupille de montage 100 comprenant :
une partie de corps allongée 102 positionnée dans les trous 22et l'alésage de la pièce de montage de goupille 12, la partie de corps 102 ayant des extrémités opposées; et
une partie saillante 104 qui fait saillie à partir d'une extrémité de la partie de corps 102 et sur laquelle sont disposées de manière opposée des première et seconde formations de montage, les formations de montage ayant des premières extrémités correspondantes 32 et des secondes extrémités correspondantes 33, les formations de montage étant inclinées l'une par rapport à l'autre de telle sorte qu'une première distance X entre les premières extrémités 32 soit supérieure à une seconde distance Y entre les secondes extrémités 33 des formations de montage respectives,
dans lequel la partie saillante 104 fait saillie à partir de la pièce de montage de goupille 12 ;
un élément de fixation 14 qui définit une assise 16 ayant des première et seconde faces orientées vers l'intérieur 40,42 disposées de manière opposée, qui sont complémentaires à et se placent contre les première et seconde formations de montage, respectivement ; et
des moyens de blocage 18 bloquant l'élément de fixation 14 de manière libérable sur la pièce de montage de goupille 12 de telle sorte qu'un déplacement angulaire et axial sensible de la goupille 100 par rapport à la pièce de montage 12 soit évité ;
dans lequel la partie de corps 102 située à l'intérieur de la pièce de montage d'outil 24 forme un tourillon qui permet la rotation de la pièce de montage d'outil 24 autour de la goupille 100.

2. Ensemble de fixation de goupille 10 selon la revendication 1, dans lequel les première et seconde formations de montage sont en forme de première et seconde rainures de positionnement 30, 31 formées dans la partie saillante 104 de la goupille 100 et dans lequel la goupille 100 est de forme sensiblement cylindrique circulaire et les première et seconde rainures de positionnement 30, 31 s'étendent transversalement sur des côtés diamétralement opposés de la partie saillante 104 de telle sorte que les rainures 30, 31 soient formées dans le même plan de coupe transversale Z de la partie saillantes 104.

3. Ensemble de fixation de goupille 10 selon la revendication 2, dans lequel chaque rainure 30, 31 est en forme d'une découpe en forme de segment, la première rainure 30 ayant une première surface de base 3 reposant dans un premier plan C et la seconde rainure 31 ayant une seconde surface de base 37 reposant dans un second plan D, les premier et second plans C, D étant inclinés l'un par rapport à l'autre à un angle α de telle sorte qu'ils ne soient pas parallèles.

4. Ensemble de fixation de goupille 10 selon la revendication 3, dans lequel l'angle α formé entre les premier et second plans C, D va de 2° à 10° inclus.

5. Ensemble de fixation de goupille 10 selon l'une quelconque des revendications précédentes, qui inclut un alésage s'étendant axialement 106 qui s'étend dans la goupille 100 à partir d'une extrémité et mène à l'intérieur d'un conduit s'étendant radialement 108 qui donne sur l'extérieur, au niveau d'une périphérie de la partie de corps 102, vers un point central longitudinal de la partie de corps 102, l'alésage 106 et le conduit 108 définissant ensemble un passage de lubrifiant.

6. Ensemble de fixation de goupille 10 selon l'une quelconque des revendications précédentes, dans lequel l'élément de fixation 14 est en forme d'une plaque sensiblement en forme de U qui définit une bouche recevant la partie saillante 104 de la goupille 100, l'assise 16 ayant un profil en forme de V lorsque la plaque est vue de face.

7. Ensemble de fixation de goupille 10 selon l'une quelconque des revendications précédentes, dans lequel l'élément de fixation 14 inclut au moins deux ouvertures 29 à travers lesquelles les moyens de blocage 18 s'étendent servant de manière libérable à attacher l'élément de fixation 14 à la pièce de montage de goupille 12.

8. Ensemble de fixation de goupille 10 selon la revendication 7, dans lequel les moyens de blocage 18 sont attachés de manière libérable à des lumières 26 dans la pièce de montage de goupille 12, dans lequel les lumières 26 correspondent aux au moins deux ouvertures 29 et chaque ouverture 29 est surdimensionnée comparativement à la lumière correspondante 26.

9. Procédé de montage après coup d'une goupille de montage 100 sur une pièce de montage de goupille 12, dans lequel la pièce de montage de goupille 12 comprend :
une paire de pattes parallèles espacées 20 ayant des trous de mise en coïncidence correspondants 22 ; et
une pièce de montage d'outil 24 ayant un alésage cylindrique circulaire et étant agencée de manière coaxiale entre les pattes 20 de telle sorte que l'alésage coïncide avec les trous 22 ; et
la goupille de montage 100 comprend :
une partie de corps allongée 102 positionnée dans les trous 22 et l'alésage de la pièce de montage de goupille 12, la partie de corps 102 ayant des extrémités opposées; et
une partie saillante 104 qui fait saillie à partir d'une extrémité de la partie de corps 102 et sur laquelle sont disposées de manière opposée des première et seconde formations de montage, les formations de montage ayant des premières extrémités correspondantes 32 et des secondes extrémités correspondantes 33, les formations de montage étant inclinées l'une par rapport à l'autre de telle sorte qu'une première distance X entre les premières extrémités 32 soit supérieure à une seconde distance Y entre les secondes extrémités 33 des formations de montage respectives,
dans lequel la partie saillante 104 fait saillie à partir de la pièce de montage de goupille 12 ;
dans lequel le procédé comprend :
le retrait d'un élément de fixation par lequel une goupille existante est fixée à la pièce de montage de goupille 12 ;
le retrait de la goupille existante d'un trou 22 dans la pièce de montage de goupille 12 ;
le remplacement de la goupille existante par la goupille de montage 100 ;
le positionnement d'un élément de fixation 14 qui définit une assise 16 ayant des première et seconde faces 40,42 orientées vers l'intérieur disposées de manière opposée, qui sont complémentaires à et se placent contre les première et seconde formations de montage, en prise avec la partie saillante 104 de la goupille de montage 100 de telle sorte que les faces 40,42 se placent contre les première et seconde formations de montage ; et
le blocage de l'élément de fixation 14 sur la pièce de montage de goupille 12 de sorte qu'un déplacement axial et angulaire sensible de la goupille 100 par rapport à la pièce de montage 12 soit évité ;
de sorte que la partie de corps 102 située à l'intérieur de la pièce de montage d'outil 24 forme un tourillon qui permet la rotation de la pièce de montage d'outil 24 autour de la goupille 100.
